(19) Europäisches Patentamt
European Patent Office
Office européen des brevets

(11) **EP 2 927 867 A1**

(12) **EUROPEAN PATENT APPLICATION**

(43) Date of publication:
**07.10.2015 Bulletin 2015/41**

(51) Int Cl.:
**G06T 7/00** (2006.01)

(21) Application number: **14305482.3**

(22) Date of filing: **02.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Hoerentrup, Jobst**
**30974 Wennigsen (DE)**

• **Schlosser, Markus**
**30177 Hannover (DE)**
• **Budiman, Adrianus Adi**
**30163 Hannover (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for determining a confidence value for an alpha value**

(57)     A method for determining a confidence value for an estimated alpha value associated to a pixel of an image and an apparatus (20) configured to perform the method are described. A determining unit (24) determines (12) the confidence value based on at least a spatial distance between the pixel and at least one of a selected pixel in a known foreground and a selected pixel in a known background. To this end a first calculating unit (22) calculates (10) a first confidence value from a first property of the pixel. A second calculating unit (23) calculates (11) at least a second confidence value from the spatial distance between the pixel and the selected pixel in the known foreground or the selected pixel in the known background. The determining unit (24) then determines (12) the confidence value for the estimated alpha value from at least the first confidence value and the second confidence value.

Fig. 3

EP 2 927 867 A1

**Description**

**FIELD OF THE INVENTION**

The invention relates to a method and an apparatus for determining confidence values associated to alpha values estimated during alpha matting. In particular, the invention relates to a method and an apparatus for determining a confidence value for an estimated alpha value associated to a pixel of an image in an alpha matting process.

**BACKGROUND OF THE INVENTION**

Alpha matting refers to the problem of softly extracting a foreground object out of an image. In contrast to binary segmentation, where each pixel is either classified as fully foreground or background, alpha matting recognizes the existence of "mixed" pixels. A major reason for such mixed pixels is the limited resolution of cameras, where light from the foreground object and the background contribute to the incoming light of a CCD element. Other reasons can be motion-blur and (semi-) transparencies in the object itself. Alpha matting and thus the soft extraction of objects from a still image or a video sequence is a fundamental problem in computer vision in general and movie post-production in particular.

The mixing coefficient is typically called "alpha". It is defined to be between 0 and 1, i.e., 0% and 100%, and describes the fraction to which light from the foreground object contributed to the incoming light on an image sensor element, i.e. to an image pixel. An alpha matting algorithm tries to estimate this alpha coefficient, as well as the unmixed foreground and background colors. Each (unmixed) color is defined by three parameters, e.g. R, G, and B values in case of the RGB color space. Alpha matting hence needs to determine seven unknowns from only three knowns. The problem is thus ill-posed and requires additional constraints. One common constraint is a trimap, which is provided along with the input image or sequences thereof. The trimap indicates three different types of regions: known foreground, known background, and an unknown region for which alpha values shall be estimated.

In J. Wang et al.: "Image and Video Matting: A Survey", Foundations and Trends in Computer Graphics and Vision, Vol. 3 (2007), pp. 97-175, a good overview is provided over the state of the art of alpha matting as of 2007. A benchmark is available in C. Rhemann et al.: "A Perceptually Motivated Online Benchmark For Image Matting", Proceedings of the 2009 IEEE Conference on Computer Vision and Pattern Recognition (CVPR'09) (2009), pp. 1826-1833.

Many recent algorithms adopt a two stage approach. See, for example, J. Wang et al.: "Optimized color sampling for robust matting", Proceedings of the 2007 IEEE Conference on Computer Vision and Pattern Recognition (CVPR'07) (2007), pp. 1-8, E. S. L. Gastal et al.: "Shared Sampling for Real-Time Alpha Matting", Computer Graphics Forum, Vol. 29 (2010), pp. 575-584, and K. He et al.: "A Global Sampling Method for Alpha Matting", Proceedings of the 2011 IEEE Conference on Computer Vision and Pattern Recognition (CVPR'11) (2011), pp. 2049-2056. In a first stage, an initial alpha matte is estimated. Since this initial alpha matte is usually noisy, it is smoothed in a second stage, under maintenance of fine details, such as edges.

For the first stage, color sampling based methods have proven to be very efficient. They try to explain an observed color in the unknown region with the help of known pixels from nearby foreground and background regions. Therefore, they make the assumption that the true unmixed colors that produced the observed color of the unknown pixel can be found more or less nearby in image space. Pairs of foreground and background candidates are evaluated by a cost function, and the pair that yields the smallest cost is finally chosen for estimating alpha. The cost function takes chromatic and spatial information into account. A further distinction is made between parametric and non-parametric versions. The former fit a parametric statistical model, e.g. a Gaussian or a mixture of Gaussians, to the color distribution of known close-by image regions, whereas the latter ones directly use pairs of individual samples to estimate alpha values. Recent algorithms show a trend towards non-parametric approaches. It seems to be difficult to build adequate models especially for highly textured image areas.

Furthermore, most color sampling based methods not only estimate an alpha value for each pixel in the unknown region, but also confidence values associated to the alpha values. Such a confidence value expresses how reliable the estimator deems an alpha value to be. Usually these values range on a scale from 0 to 1, where 0 represents a fully unreliable estimate and 1 represents a fully reliable one. This confidence information can then be leveraged in the subsequent smoothing stage.

The confidence is typically computed from quantities in color space. An important measure is the chromatic distortion $M_p$, which is the distance between the color of the unknown pixel and the line connecting the colors of the chosen foreground and background candidates:

$$M_p\left(F^i, B^j\right) = \left\|C_p - \left(\alpha_p F^i + \left(1 - \alpha_p\right)B^j\right)\right\|, \qquad (1)$$

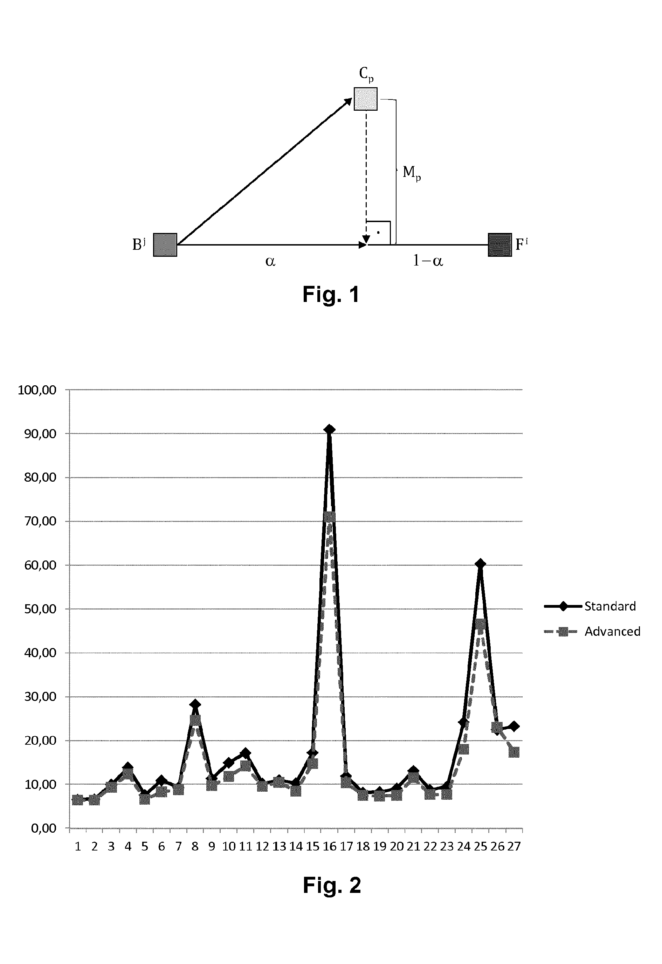

where $F^i$ and $B^j$ denote the colors of the foreground and background samples, $C_p$ denotes the color of the unknown pixel, and $\alpha_p$ is the estimated alpha value for the unknown pixel. It is illustrated in Fig. 1.

In all the approaches a confidence of 1 is assigned to the estimated alpha value when the chromatic distortion is 0, i.e. when the color of the unknown pixel, the color of the foreground candidate, and the color of the background candidate are collinear in color space. In this case, the color of the unknown pixel can be perfectly explained as a linear mixture of the two candidate colors. If the candidate pair, however, results in some remaining chromatic distortion, the algorithms assert that the larger the chromatic distortion, the less the pair is deemed suitable to explain the color of the unknown pixel, the less reliable the estimated alpha, and, as a consequence, the lower the assigned confidence.

## SUMMARY OF THE INVENTION

It is an object of the present invention to propose an improved solution for determining a confidence value for an estimated alpha value associated to a pixel.

According to one aspect of the invention, a method for determining a confidence value for an estimated alpha value associated to a pixel of an image comprises determining the confidence value based on at least a spatial distance between the pixel and at least one of a selected pixel in a known foreground and a selected pixel in a known background.

Accordingly, an apparatus configured to determine a confidence value for an estimated alpha value associated to a pixel of an image comprises a determining unit configured to determine the confidence value based on at least a spatial distance between the pixel and at least one of a selected pixel in a known foreground and a selected pixel in a known background.

Also, a computer readable storage medium has stored therein instructions enabling determining a confidence value for an estimated alpha value associated to a pixel of an image, which when executed by a computer, cause the computer to determine the confidence value based on at least a spatial distance between the pixel and at least one of a selected pixel in a known foreground and a selected pixel in a known background.

According to the present invention, advantage is taken of the pieces of information used in the cost function for the non-parametric color sampling stage also in the evaluation of the reliability/confidence for the resulting alpha estimates. In particular, the commonly used color information is augmented at least with spatial information. Taking the chromatic distortion, or even color information in general, alone to determine a confidence measure is often insufficient. Therefore, all pieces of information that play a role in the cost function that was used in the first stage to select the best sample pair are also used for evaluating the reliability of the estimated alpha value.

Advantageously, the following is performed:

- calculating a first confidence value from a first property of the pixel;
- calculating at least a second confidence value from the spatial distance between the pixel and the selected pixel in the known foreground or the selected pixel in the known background; and
- determining the confidence value for the estimated alpha value from at least the first confidence value and the second confidence value.

In addition to considering other properties, e.g. quantities in color space such as the chromatic distortion, a final confidence associated to an alpha value of a pixel in the unknown region is computed under consideration of a spatial distance between the unknown pixel and a selected pixel in the known foreground or background. For example, the selected pixel in the known foreground is the final foreground candidate selected by the alpha estimation algorithm, and the selected pixel in the known background is the final background candidate selected by the alpha estimation algorithm. Alternatively, the spatially nearest pixels in the known foreground and background are used. Advantageously, distinct spatial confidences are computed for the distance to the selected foreground pixel and the distance to the selected background pixel. Preferably, the confidence value for the estimated alpha value is determined using one of an averaging operation, a weighted averaging operation, a maximum operation, and multiplication operation.

In experiments it has been found that it is especially advantageous to take spatial information in the form of the distance between the unknown sample and the selected samples into account. The confidence function could even be identical to the cost function, if appropriate after some sort of normalization, e.g. by mapping it with an exponential function. The experiments have also shown that, for the confidence evaluation, it is better to use the absolute value of the just mentioned distance, whereas, for the sample selection, the relative distance as defined by K. He et al. for the Global Matting approach is more meaningful.

Furthermore, many pixels in the unknown region are unmixed ones. Naturally, the color of an unmixed pixel does not need to be explained by any mixture of colors. A statistical analysis that has been conducted during the experiments confirmed that spatial information is especially helpful in the computation of meaningful confidences for these unmixed pixels. Note that the matting algorithm does not know whether a pixel is a truly mixed pixel or an unmixed one. However, such a binary categorization is not necessary. Instead, it is enough to say that the closer the estimated alpha value is to 0 or 1, the more likely the pixel is an unmixed one.

According to another aspect of the invention, a method for determining a confidence value for an estimated alpha value associated to a pixel of an image comprises determining the confidence value for the estimated alpha value in such way that the confidence value is smaller than confidence values of known pixels not subjected to alpha estimation.

Similarly, an apparatus configured to determine a confidence value for an estimated alpha value associated to a pixel of an image comprises a determining unit configured to determine the confidence value for the estimated alpha value in such way that the confidence value is smaller than confidence values of known pixels not subjected to alpha estimation.

Also, a computer readable storage medium has stored therein instructions enabling determining a confidence value for an estimated alpha value associated to a pixel of an image, which when executed by a computer, cause the computer to determine the confidence value for the estimated alpha value in such way that the confidence value is smaller than confidence values of known pixels not subjected to alpha estimation. Advantageously, a significantly lower confidence value is assigned to estimated alpha values as compared with known alpha values provided by the user. In the field of alpha matting, it is very common that a user provides some input scribbles or even a trimap, both of which indicate at least some known foreground and background pixels. These known pixels are apparently very reliable and thus receive a higher confidence than any estimated alpha value.

Of course, the above indicated aspects of the inventions can also be used in combination for determining improved confidence values.

More meaningful confidence values are helpful for a subsequent smoothing stage to yield a higher quality alpha matte. More meaningful here means that a stronger (negative) correlation is established between the alpha estimation error and the associated confidence values.

The proposed solution has very low, almost negligible computational costs, while its impact on the quality of the final alpha matte is significant. At the same time it is sufficiently general to allow application in any color sampling based matting algorithm.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

**BRIEF DESCRIPTION OF THE DRAWINGS**

Fig. 1    illustrates use of a color-space projection to determine the alpha value of an unknown pixel;

Fig. 2    shows experimental results of the influence of the proposed confidence computation on the quality of the final alpha matte;

Fig. 3    schematically illustrates a method according to the invention; and

Fig. 4    schematically illustrates an apparatus configured to perform a method according to the invention.

**DETAILED DESCRIPTION OF PREFERED EMBODIMENTS**

According to the present invention, advantage is taken of the pieces of information used in the cost function for the non-parametric color sampling stage also in the evaluation of the reliability for the resulting alpha estimates.

A simple embodiment of the proposed approach that yields satisfying results is shown by the following C programming code. "epsC" denotes the chromatic distortion, "dbsquare" the squared spatial distance between the unknown pixel and the final background candidate, and "dfsquare" the squared spatial distance between the unknown pixel and the final foreground candidate.

```
float maxC = 1.f/7.f; // A maximum confidence
if(alpha == 0) {
```

```
const float SIGC = 2.f;
float cc = exp(-epsC/
        (2*SIGC*SIGC)); // color-space confidence
const float SIGB = 8.f;
float cb = exp (- (dbsquare-1)/
        (2*SIGB*SIGB)); II background confidence
confidence = maxC*(cc+cb)/2; // overall confidence
 } else if(alpha == 1.f) {
const float SIGC = 2.f;
float cc = exp(-epsC/
        (2*SIGC*SIGC)); // color-space confidence
const float SIGF = 2.f;
float cf = exp(-(dfSquare-1)/
        (2*SIGF*SIGF)); // foreground confidence
confidence = maxC*(cc+cf)/2; // overall confidence
 } else {
const float SIGC = 1.f;
float cc = exp(-epsC/
        (2*SIGC*SIGC)); // color-space confidence
const float SIGB = 8.f;
float cb = exp- (dbsquare-1)/
        (2*SIGB*SIGB)); // background confidence
const float SIGF = 1.f;
float cf = exp(-(dfSquare-1)/
        (2*SIGF*SIGF)); // foreground confidence
confidence = maxC*(cc+cf+cb)/3; // overall confidence
 }
```

The diagram in Fig. 2 shows the influence of the proposed confidence computation on the quality of the final alpha matte when using the 27 training test images provided in the benchmark by C. Rhemann et al. Since ground truth alpha mattes are available for the training data set, the error of an estimated alpha matte can be quantified. The publication by K. He et al. related to Global Matting describes an alpha matting system where alpha values and associated confidence values are computed in a first stage. The noisy alpha matte is then refined in a subsequent Matting Laplacian based optimization stage under consideration of the confidence values. In the diagram, the horizontal axis identifies the 27 test images. The vertical axis represents the remaining average error of the final alpha mattes in form of a mean absolute difference between an estimated alpha and its ground-truth value on a scale from 0 to 255. The "Standard" curve represents the results when using the confidence function used by K. He et al. The "Advanced" curve shows the results when using only the simple embodiment of the current solution described above. It can be seen that the proposed method consistently produces higher quality alpha mattes. The average SAD (SAD: Sum of Absolute Differences) is reduced from 17.6 for the standard version to 14.7 for the proposed method, an improvement of almost 17%. It should be noted how consistently the proposed method improves the quality of the alpha mattes over the complete benchmark training data set.

As can be seen from the above code, the final confidence of a pixel subjected to alpha estimation cannot exceed a defined limit. This limit is defined such that the resulting confidence is smaller than the confidence value of the known pixels.

The spatial foreground confidence is defined such that the larger the spatial distance, the smaller the confidence. Preferably, the confidence function is an exponential function. As an example, when $d_F$ denotes said distance and $\sigma_F$ and **m** are some constants, the spatial foreground confidence is computed as

$$c_F = m \cdot e^{\frac{-d_F^2}{\sigma_F^2}}. \qquad (2)$$

Similarly, the spatial background confidence is defined such that the larger the spatial distance, the smaller the confidence. Favorably, the confidence function is an exponential function. As an example, when $d_B$ denotes said distance and $\sigma_B$ and n are some constants, the spatial background confidence is computed by

$$c_B = n \cdot e^{\frac{-d_B^2}{\sigma_B^2}} . \tag{3}$$

Preferably, the parameter values of the functions used for calculating the foreground confidence and the background confidence are adapted in dependence on the estimated alpha value. Similarly, also the determined overall confidence may depend on the estimated alpha value.

In the above code, an averaging is used for determining the overall confidence from the individual confidence values. It is, however, likewise possible to use other operations, e.g. a weighted averaging operation, a maximum operation, or a multiplication operation.

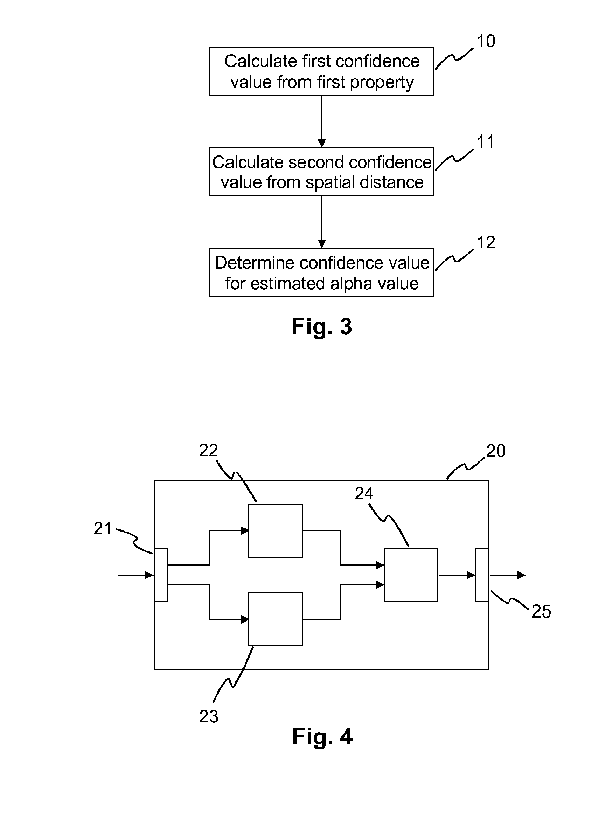

Fig. 3 schematically illustrates a method according to the invention for determining an estimated alpha value for a pixel of an image in an alpha matting process. In principle, a confidence value is determined 12 based on at least a spatial distance between the pixel and at least one of a selected pixel in a known foreground and a selected pixel in a known background. To this end a first confidence value is calculated 10 from a first property of the pixel. At least a second confidence value is calculated 11 from the spatial distance between the pixel and the selected pixel in the known foreground or the selected pixel in the known background. The confidence value for the estimated alpha value is then determined 12 from at least the first confidence value and the second confidence value. Preferably, during the determining step 12 the resulting confidence value is kept smaller than confidence values of known pixels not subjected to alpha estimation.

An apparatus 20 configured to perform the method according to the invention is schematically depicted in Fig. 4. The apparatus 20 has an input 21 for receiving an image or a sequence of images. A determining unit 24 determines 12 a confidence value based on at least a spatial distance between the pixel and at least one of a selected pixel in a known foreground and a selected pixel in a known background. To this end a first calculating unit 22 calculates 10 a first confidence value from a first property of the pixel. A second calculating unit 23 calculates 11 at least a second confidence value from the spatial distance between the pixel and the selected pixel in the known foreground or the selected pixel in the known background. The determining unit 24 then determines 12 the confidence value for the estimated alpha value from at least the first confidence value and the second confidence value. Preferably, the determining unit 24 is configured such that the resulting confidence value is kept smaller than confidence values of known pixels not subjected to alpha estimation. The results obtained by the determining unit 24 are preferably made available via an output 25. The output 25 may also be combined with the input 21 into a single bidirectional interface. Of course, the different units 22, 23, 24 may likewise be fully or partially combined into a single unit or implemented as software running on a processor.

**Claims**

1. A method for determining a confidence value for an estimated alpha value associated to a pixel of an image, the method **comprising** determining (12) the confidence value based on at least a spatial distance between the pixel and at least one of a selected pixel in a known foreground and a selected pixel in a known background.

2. The method according to claim 1, the method **comprising:**

   - calculating (10) a first confidence value from a first property of the pixel;
   - calculating (11) at least a second confidence value from the spatial distance between the pixel and the selected pixel in the known foreground or the selected pixel in the known background; and
   - determining (12) the confidence value for the estimated alpha value from at least the first confidence value and the second confidence value.

3. The method according to claim 2, **wherein** the first confidence value is calculated (10) from a quantity in color space.

4. The method according to claim 3, **wherein** the quantity in color space is a chromatic distortion.

5. The method according to one of claims 1 to 4, **wherein** the selected pixel in the known foreground is the final foreground candidate selected by an alpha estimation algorithm used for determining the alpha value, and the selected pixel in the known background is the final background candidate selected by the alpha estimation algorithm.

6. The method according to one of claims 1 to 4, **wherein** the selected pixel in the known foreground is the spatially nearest pixel in the foreground, and the selected pixel in the known background is the spatially nearest pixel in the background.

7. The method according to one of the preceding claims, **wherein** the second confidence value is calculated (11) such that the larger the spatial distance of the pixel to the selected pixel in the known foreground, the smaller the confidence.

8. The method according to one of the preceding claims, **wherein** the second confidence value is calculated (11) such that the larger the spatial distance of the pixel to the selected pixel in the known background, the smaller the confidence.

9. The method according to claim 7 or 8, **wherein** parameters of functions used for calculating (11) the second confidence value depend on the alpha value associated to the pixel.

10. The method according to one of the preceding claims, **wherein** the determined (12) confidence value for the estimated alpha value depends on the alpha value associated to the pixel.

11. The method according to one of the preceding claims, **wherein** the confidence value for the estimated alpha value is determined (12) using one of an averaging operation, a weighted averaging operation, a maximum operation, and multiplication operation.

12. The method according to one of the preceding claims, **wherein** the confidence value for the estimated alpha value may not exceed a defined limit.

13. The method according to claim 12, **wherein** the defined limit is selected such that the confidence value for the estimated alpha value is smaller than confidence values of known pixels not subjected to alpha estimation.

14. An apparatus (20) configured to determine a confidence value for an estimated alpha value associated to a pixel of an image, the apparatus (20) **comprising** a determining unit (24) configured to determine (12) the confidence value based on at least a spatial distance between the pixel and at least one of a selected pixel in a known foreground and a selected pixel in a known background.

15. A computer readable storage medium having stored therein instructions enabling determining a confidence value for an estimated alpha value associated to a pixel of an image, which when executed by a computer, cause the computer to determine (12) the confidence value based on at least a spatial distance between the pixel and at least one of a selected pixel in a known foreground and a selected pixel in a known background.

16. A method for determining a confidence value for an estimated alpha value associated to a pixel of an image, the method **comprising** determining (12) the confidence value for the estimated alpha value in such way that the confidence value is smaller than confidence values of known pixels not subjected to alpha estimation.

17. An apparatus (20) configured to determine a confidence value for an estimated alpha value associated to a pixel of an image, the apparatus (20) **comprising** a determining unit (24) configured to determine (12) the confidence value for the estimated alpha value in such way that the confidence value is smaller than confidence values of known pixels not subjected to alpha estimation.

18. A computer readable storage medium having stored therein instructions enabling determining a confidence value for an estimated alpha value associated to a pixel of an image, which when executed by a computer, cause the computer to determine (12) the confidence value for the estimated alpha value in such way that the confidence value is smaller than confidence values of known pixels not subjected to alpha estimation.

Fig. 1

Fig. 2

| Calculate first confidence value from first property | 10 |

↓

| Calculate second confidence value from spatial distance | 11 |

↓

| Determine confidence value for estimated alpha value | 12 |

**Fig. 3**

**Fig. 4**

Europäisches
Patentamt

European
Patent Office

Office européen
des brevets

**EUROPEAN SEARCH REPORT**

Application Number

EP 14 30 5482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI SUN ET AL: "A saliency-based sampling method for image matting", FUZZY SYSTEMS AND KNOWLEDGE DISCOVERY (FSKD), 2012 9TH INTERNATIONAL CONFERENCE ON, IEEE, 29 May 2012 (2012-05-29), pages 1686-1689, XP032455672, DOI: 10.1109/FSKD.2012.6233840 ISBN: 978-1-4673-0025-4 | 1-5,7,8, 11,14,15 | INV. G06T7/00 |
| Y | * page 1688 * | 6,9,10, 12,13 | |
| X,D | JUE WANG ET AL: "Optimized Color Sampling for Robust Matting", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1 June 2007 (2007-06-01), pages 1-8, XP031114263, ISBN: 978-1-4244-1179-5 | 1-4,7,8, 11,14-18 | |
| Y | * page 3 - page 4; figure 4 * | 12,13 | |
| Y | Jorge Lacasa Cabeza: "Explointing local and global knowledge in alpha matting", Masterarbeit in Regelungstheorie und Robotik, 10 April 2013 (2013-04-10), pages 1-49, XP055102600, TU Darmstadt Retrieved from the Internet: URL:http://upcommons.upc.edu/pfc/bitstream /2099.1/19819/4/Master_Thesis_of_Jorge_Lac asa_Cabeza.pdf [retrieved on 2014-02-17] * page 27 - page 32 * * page 41 * | 6,9,10 | |

TECHNICAL FIELDS
SEARCHED (IPC)

G06T

-/--

| The present search report has been drawn up for all claims | | |
|---|---|---|
| Place of search | Date of completion of the search | Examiner |
| Munich | 24 October 2014 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 5482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EDUARDO S. L. GASTAL ET AL: "Shared Sampling for Real-Time Alpha Matting", COMPUTER GRAPHICS FORUM, vol. 29, no. 2, 7 May 2010 (2010-05-07), pages 575-584, XP055103041, ISSN: 0167-7055, DOI: 10.1111/j.1467-8659.2009.01627.x * page 5 - page 7 * | 1-18 | |

TECHNICAL FIELDS
SEARCHED      (IPC)

The present search report has been drawn up for all claims

| Place of search | Date of completion of the search | Examiner |
|---|---|---|
| Munich | 24 October 2014 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 927 867 A1

**Non-patent literature cited in the description**

- **J. WANG et al.** Image and Video Matting: A Survey. *Foundations and Trends in Computer Graphics and Vision,* 2007, vol. 3, 97-175
- **C. RHEMANN et al.** A Perceptually Motivated Online Benchmark For Image Matting. *Proceedings of the 2009 IEEE Conference on Computer Vision and Pattern Recognition (CVPR'09,* 2009, 1826-1833
- **J. WANG et al.** Optimized color sampling for robust matting. *Proceedings of the 2007 IEEE Conference on Computer Vision and Pattern Recognition (CVPR'07,* 2007, 1-8
- **E. S. L. GASTAL et al.** Shared Sampling for Real-Time Alpha Matting. *Computer Graphics Forum,* 2010, vol. 29, 575-584
- **K. HE et al.** A Global Sampling Method for Alpha Matting. *Proceedings of the 2011 IEEE Conference on Computer Vision and Pattern Recognition (CVPR'11,* 2011, 2049-2056